# DEMANDE DE BREVET EUROPEEN

(11) **EP 3 671 767 A1**
(43) Date de publication de la demande: **24.06.2020**
(21) Numéro de dépôt: 19218496.8
(22) Date de dépôt: 20.12.2019
(51) Int. Cl.: H01B 7/28, H01B 3/44

(54) **CÂBLE ÉLECTRIQUE RÉSISTANT AUX ARBORESCENCES D'EAU**

(30) Priorité: 21.12.2018 FR 1873876
(71) Demandeur: Nexans, 92400 Courbevoie (FR)
(72) Inventeur: KOELBLIN, Christian, 01800 Meximieux (FR); MAUGIN, Melek, 69700 CHASSAGNY (FR)
(74) Mandataire: De Lamo Marin, Sandra

(57) **Abrégé**

L'invention concerne un câble électrique comprenant au moins une couche polymère obtenue à partir d'une composition polymère comprenant au moins un matériau polymère thermoplastique à base de polypropylène et au moins un composé oxygéné ayant une température de fusion supérieure ou égale à 110°C environ.

## Description

L'invention concerne un câble électrique comprenant au moins une couche polymère obtenue à partir d'une composition polymère comprenant au moins un matériau polymère thermoplastique à base de polypropylène et au moins un composé oxygéné ayant une température de fusion supérieure ou égale à 110°C environ.

L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique. L'invention s'applique en particulier aux câbles électriques présentant une résistance améliorée au vieillissement en milieu humide sous tension électrique.

Les câbles d'énergie moyenne et haute tension peuvent être en contact avec l'humidité environnante pendant leur durée de vie. La présence de l'humidité combinée à la présence d'un champ électrique ainsi que d'un matériau polymère favorisent la dégradation progressive des propriétés isolantes du câble. Ce mécanisme de dégradation, bien connu sous les termes « croissance d'arborescences d'eau », peut ainsi mener au claquage du câble concerné et constitue donc une menace considérable pour la fiabilité du réseau de transport d'énergie avec des conséquences économiques bien connues engendrées par les défaillances de courant.

De nombreux composés de structures chimiques variées réduisant la formation d'arborescences d'eau ont été proposés dans des câbles à base de polyéthylène, et notamment de polyéthylène réticulé (câbles de type XLPE). En particulier, le document US 4,305,849 décrit l'utilisation d'un polyéthylène glycol de masse molaire allant de 1000 à 20000 g/mol dans une couche isolante à base de polyéthylène ou d'un copolymère d'éthylène et d'acétate de vinyle. Toutefois, cette solution n'est pas adaptée pour un câble à base de polypropylène, en particulier un câble comprenant au moins une couche polymère obtenue à partir d'une composition comprenant une matrice de polypropylène. En effet, de tels câbles à base de polypropylène sont généralement fabriqués à des températures élevées, notamment autour de 200°C environ, qui peuvent entraîner la détérioration d'un tel composé réduisant la formation d'arborescences d'eau.

Le but de la présente invention est par conséquent de pallier les inconvénients des techniques de l'art antérieur en proposant un câble électrique, notamment à moyenne ou haute tension, à base de polymère(s) de propylène, ledit câble présentant une résistance améliorée aux vieillissements, dans un environnement humide en présence d'un champ électrique, et de préférence tout en garantissant de bonnes propriétés mécaniques.

Le but est atteint par l'invention qui va être décrite ci-après.

L'invention a pour premier objet un câble électrique comprenant au moins un élément électriquement conducteur allongé, et au moins une couche polymère entourant ledit élément électriquement conducteur allongé, caractérisé en ce que la couche polymère est obtenue à partir d'une composition polymère comprenant au moins un matériau polymère thermoplastique à base de polypropylène et au moins un composé oxygéné ayant une température de fusion supérieure ou égale à 110°C environ.

Ainsi, grâce à la présence d'un composé oxygéné ayant une température de fusion supérieure ou égale à 110°C environ au sein d'une couche polymère à base de polypropylène d'un câble électrique, la résistance aux vieillissements, dans un environnement humide en présence d'un champ électrique, est améliorée de façon significative, et de préférence tout en garantissant de bonnes propriétés mécaniques.

### Le composé oxygéné ayant une température de fusion supérieure ou égale à 110°C

Ledit composé oxygéné est notamment utilisé en tant qu'agent réduisant les arborescences d'eau. Il est solide à température ambiante, ou en d'autres termes à une température de 18 à 25°C environ. Un composé liquide à température ambiante peut par exemple montrer une tendance accrue à la migration, et/ou être dégradé pendant la mise en œuvre, notamment de par une stabilité thermique limitée.

Le composé oxygéné présente une bonne stabilité chimique, ce qui peut lui permettre avantageusement d'éviter toute détérioration lors de la fabrication du câble de l'invention.

Généralement, les antioxydants utilisés dans le domaine des couches polymères pour câble ne sont pas des agents réduisant les arborescences d'eau. En effet, les antioxydants sont consommés pendant le procédé de fabrication du câble et au cours de la vie du câble pendant les périodes où ledit câble est soumis à des températures élevées. A contrario, les agents anti-arborescences d'eau doivent rester stables et présents dans le câble aussi longtemps que possible pour être efficaces.

Selon une forme de réalisation préférée de l'invention, le composé oxygéné a une température de fusion supérieure ou égale à 120°C environ, de façon particulièrement préférée supérieure ou égale à 126°C environ, et de façon plus particulièrement préférée supérieure ou égale à 130°C environ.

Le composé oxygéné est de préférence un composé organique, et de façon particulièrement préférée un composé non métallique.

Le composé oxygéné peut être un matériau polymère ou non polymère.

Le composé oxygéné peut avoir une masse molaire allant de 200 à 5000000 g/mol environ.

Lorsque le composé oxygéné est un matériau polymère, sa masse molaire va plus particulièrement de 10000 à 5000000 g/mol environ.

Lorsque le composé oxygéné est un matériau non polymère, sa masse molaire va plus particulièrement de 200 à 5000 g/mol environ.

Le composé oxygéné présente une température de fusion. En d'autres termes, ledit composé oxygéné est un composé cristallin ou semi-cristallin.

Dans la présente invention, la température de fusion du composé oxygéné est facilement mesurable par des techniques bien connues de l'homme du métier telles que par exemple par calorimétrie différentielle à balayage (bien connue sous l'anglicisme « *Differential Scanning Calorimetry* » ou DSC), par mesure du point de goutte selon la norme ISO 2176 ou ASTM D 3954, et/ou par mesure du point de ramollissement selon la norme ASTM D 3104.

L'expression « composé oxygéné » signifie un composé comprenant au moins un atome d'oxygène, et de préférence comprenant plusieurs atomes d'oxygène.

Le composé oxygéné peut comprendre une ou plusieurs fonctions choisies parmi les fonctions alcool, ester, acide, anhydride d'acide, et un de leurs mélanges, et de préférence parmi les fonctions alcool et anhydride d'acide.

Le composé oxygéné est de préférence différent d'un phénol encombré. En d'autres termes, le composé oxygéné ne comprend pas de préférence de phénol comprenant des groupements *tert*-butyle dans les deux positions adjacentes au groupement hydroxyle du phénol.

Selon une forme de réalisation particulièrement préférée, le composé oxygéné est choisi parmi les polyols, les polyoléfines fonctionnalisées par des fonctions anhydride d'acide, et les cires de polyester, et de façon plus particulièrement préférée parmi les polyols et les polyoléfines fonctionnalisées par des fonctions anhydride d'acide.

Les polyols peuvent être choisis parmi les polyols comprenant de 3 à 40 atomes de carbone, de préférence de 3 à 20 atomes de carbone, et de façon particulièrement préférée de 3 à 10 atomes de carbone.

Parmi les polyols, les polyols aliphatiques et les polyols comprenant au moins deux fonctions alcools primaires (-CH₂OH) sont particulièrement préférés.

À titre d'exemples de polyols, on peut citer le dipentaérythritol, le néopentyl glycol, ou le di-triméthylolpropane.

Le dipentaérythritol est préféré.

Les polyoléfines fonctionnalisées par des fonctions anhydride d'acide peuvent être choisies parmi les homo- et les copolymères d'éthylène fonctionnalisés par des fonctions anhydride d'acide, et les homo- et les copolymères de propylène fonctionnalisés par des fonctions anhydride d'acide, de préférence parmi les homo- et les copolymères de propylène fonctionnalisés par des fonctions anhydride d'acide, et de façon particulièrement préférée parmi les homopolymères de propylène fonctionnalisés par des fonctions anhydride d'acide. Les homopolymères de propylène fonctionnalisés par des fonctions anhydride d'acide présentent des performances améliorées en termes de résistance au vieillissement en milieu humide sous tension électrique.

Les fonctions anhydride d'acide sont avantageusement des fonctions anhydride maléique, anhydride acétique ou anhydride phtalique, et de préférence anhydride maléique.

Les polyoléfines fonctionnalisées par des fonctions anhydride d'acide peuvent avoir un indice de saponification allant de 5 à 90 environ, de préférence allant de 40 à 90 environ, et de façon particulièrement préférée allant de 60 à 90 environ.

Les polyoléfines fonctionnalisées par des fonctions anhydride d'acide sont de préférence obtenues par catalyse métallocène.

Les cires de polyesters peuvent être choisies parmi les polyoléfines fonctionnalisées par des fonctions ester, et de préférence les homo- et les copolymères d'éthylène fonctionnalisés par des fonctions ester.

La composition polymère peut comprendre de 0,1 à 15% en poids environ, de préférence de 0,1 à 10% en poids environ, et de façon particulièrement préférée de 0,2 à 7% en poids environ, de composé oxygéné par rapport au poids total de la composition polymère.

Selon une première variante, le composé oxygéné est un polyol, notamment tel que défini dans l'invention.

Lorsque le composé oxygéné est un polyol, la composition polymère peut comprendre de 0,1 à 5% en poids environ de polyol, et de préférence de 0,2 à 5% en poids environ de polyol, par rapport au poids total de la composition polymère.

Selon une deuxième variante, le composé oxygéné est une polyoléfine fonctionnalisée par des fonctions anhydride d'acide, notamment telle que définie dans l'invention.

Lorsque le composé oxygéné est une polyoléfine fonctionnalisée par des fonctions anhydride d'acide, la composition polymère peut comprendre de 1 à 10% en poids environ de polyoléfine fonctionnalisée par des fonctions anhydride d'acide, et de préférence de 1 à 7% en poids environ de polyoléfine fonctionnalisée par des fonctions anhydride d'acide, par rapport au poids total de la composition polymère.

Selon une troisième variante, le composé oxygéné est une cire polyester, notamment telle que définie dans l'invention.

Lorsque le composé oxygéné est une cire polyester, la composition polymère peut comprendre de 0,5 à 10% en poids environ de cire polyester, par rapport au poids total de la composition polymère.

Le composé oxygéné peut avoir une température de fusion inférieure ou égale à 250°C environ, de préférence inférieure ou égale à 230°C environ, de façon particulièrement préférée inférieure ou égale à 200°C, et de façon plus particulièrement préférée inférieure ou égale à 190°C environ. Cela peut permettre avantageusement de faciliter le mélange des ingrédients lors de la préparation de la composition polymère et de la fabrication du câble.

Selon une forme de réalisation particulièrement préférée de l'invention, le composé oxygéné est choisi parmi les polyols aliphatiques, les polyols comprenant au moins deux fonctions alcools primaires, et les homo- et les copolymères de propylène fonctionnalisés par des fonctions anhydride d'acide.

### Le matériau polymère thermoplastique à base de polypropylène

Le matériau polymère thermoplastique à base de polypropylène peut comprendre un homopolymère ou un copolymère de propylène P₁, et de préférence un copolymère de propylène P₁.

L'homopolymère de propylène P₁ a de préférence un module élastique allant de 1250 à 1600 MPa environ.

L'homopolymère de propylène P₁ peut représenter au moins 10% en poids environ, et de préférence de 15 à 30% en poids environ, par rapport au poids total du matériau polymère thermoplastique à base de polypropylène.

À titre d'exemples de copolymères de propylène P₁, on peut citer les copolymères de propylène et d'oléfine, l'oléfine étant notamment choisie parmi l'éthylène et une oléfine α₁ différente du propylène.

L'éthylène ou l'oléfine α₁ différente du propylène du copolymère de propylène et d'oléfine représente de préférence au plus 15% en mole environ, et de façon particulièrement préférée au plus 10% en mole environ, par rapport au nombre de moles total de copolymère de propylène et d'oléfine.

L'oléfine α₁ différente du propylène peut répondre à la formule CH₂=CH-R¹, dans laquelle R¹ est un groupe alkyle linéaire ou ramifié ayant de 2 à 12 atomes de carbone, notamment choisie parmi les oléfines α₁ suivantes: 1-butène, 1-pentène ; 4-méthyl-1-pentène, 1-hexène, 1-octène, 1-décène, 1-dodécène, et un de leurs mélanges.

Les copolymères de propylène et d'éthylène sont préférés à titre de copolymères de propylène P₁.

Le copolymère de propylène P₁ peut être un copolymère statistique de propylène ou un copolymère de propylène hétérophasé.

Dans l'invention, le copolymère statistique de propylène P₁ a de préférence un module élastique allant de 600 à 1200 MPa environ.

À titre d'exemple de copolymère statistique de propylène, on peut citer celui commercialisé par la société Borealis sous la référence Bormed® RB 845 MO.

Le copolymère de propylène hétérophasé peut comprendre une phase thermoplastique de type propylène et une phase élastomère thermoplastique de type copolymère d'éthylène et d'une oléfine α₂.

L'oléfine α₂ de la phase élastomère thermoplastique du copolymère hétérophasé peut être le propylène.

La phase élastomère thermoplastique du copolymère hétérophasé peut représenter au moins 20% en poids environ, et de préférence au moins 45% en poids environ, par rapport au poids total du copolymère hétérophasé.

Le copolymère de propylène hétérophasé a de préférence un module élastique allant de 50 à 1200 MPa environ, et de façon particulièrement préférée : soit un module élastique allant de 50 à 550 MPa environ, et de façon plus particulièrement préférée allant de 50 à 250 MPa environ ; soit un module élastique allant de 600 à 1200 Mpa environ.

À titre d'exemple de copolymère hétérophasé, on peut mentionner le copolymère hétérophasé commercialisé par la société LyondeIIBaseII sous la référence Adflex® Q 200 F, ou le copolymère hétérophasé commercialisé par la société LyondeIIBaseII sous la référence EP®2967.

L'homopolymère ou le copolymère de propylène P₁ peut avoir une température de fusion supérieure à 110°C environ, de préférence supérieure à 130°C environ, de façon particulièrement préférée supérieure ou égale à 140°C environ, et de façon plus particulièrement préférée allant de 140 à 170°C environ.

L'homopolymère ou le copolymère de propylène P₁ peut avoir une enthalpie de fusion allant de 20 à 100 J/g environ.

En particulier, l'homopolymère de propylène P₁ a une enthalpie de fusion allant de 80 à 90 J/g environ.

Le copolymère statistique de propylène P₁ peut avoir une enthalpie de fusion allant de 40 à 80 J/g environ.

Le copolymère de propylène hétérophasé P₁ peut avoir une enthalpie de fusion allant de 20 à 50 J/g environ.

L'homopolymère ou le copolymère de propylène P₁ peut avoir un indice de fluidité allant de 0,5 à 3 g/10 min environ, mesuré à 230°C environ avec une charge de 2,16 kg environ selon la norme ASTM D1238-00.

Le copolymère statistique de propylène P₁ peut avoir un indice de fluidité allant de 1,2 à 2,5 g/10 min environ, et de préférence allant de 1,5 à 2,5 g/10 min, mesuré à 230°C environ avec une charge de 2,16 kg environ selon la norme ASTM D1238-00.

Le copolymère de propylène hétérophasé P₁ peut avoir un indice de fluidité allant de 0,5 à 1,5 g/10 min environ, et de préférence allant de 0,5 à 1,4 g/10 min environ, mesuré à 230°C environ avec une charge de 2,16 kg environ selon la norme ASTM D1238-00.

Le matériau polymère thermoplastique à base de polypropylène peut comprendre plusieurs polymères de propylène différents, comme par exemple plusieurs homopolymères de propylène P₁ différents, au moins un homopolymère de propylène P₁ et au moins un copolymère de propylène P₁, ou plusieurs copolymères de propylène P₁ différents.

Le matériau polymère thermoplastique à base de polypropylène comprend de préférence au moins 50% en poids environ, de préférence de 55 à 90% en poids environ, et de façon particulièrement préférée de 60 à 90% en poids environ, de polymère(s) de propylène, par rapport au poids total du matériau polymère thermoplastique à base de polypropylène.

Lorsque le matériau polymère thermoplastique à base de polypropylène comprend plusieurs copolymères de propylène P₁ différents, il comprend de préférence deux copolymères de propylène P₁ différents, lesdits copolymères de propylène P₁ étant tels que définis ci-dessus.

En particulier, le matériau polymère thermoplastique à base de polypropylène peut comprendre un copolymère statistique de propylène (en tant que premier copolymère de propylène P₁) et un copolymère de propylène hétérophasé (en tant que deuxième copolymère de propylène P₁), ou deux copolymères de propylène hétérophasés différents.

Lorsque le matériau polymère thermoplastique à base de polypropylène comprend un copolymère statistique de propylène et un copolymère de propylène hétérophasé, ledit copolymère de propylène hétérophasé a de préférence un module élastique allant de 600 à 1200 Mpa environ.

Selon une forme de réalisation de l'invention, les deux copolymères de propylène hétérophasés ont un module élastique différent. De préférence, le matériau polymère thermoplastique à base de polypropylène comprend un premier copolymère de propylène hétérophasé ayant un module élastique allant de 50 à 550 MPa environ, et de façon particulièrement préférée allant de 50 à 250 MPa environ ; et un deuxième copolymère de propylène hétérophasé ayant un module élastique allant de 600 à 1200 MPa environ.

Avantageusement, les premier et deuxième copolymères de propylène hétérophasés ont un indice de fluidité tel que défini dans l'invention.

Ces combinaisons de copolymères de propylène P₁ peuvent permettre avantageusement d'améliorer les propriétés mécaniques de la couche polymère. En particulier, la combinaison permet d'obtenir des propriétés mécaniques optimisées de la couche polymère, notamment en termes d'allongement à la rupture, et de flexibilité ; et/ou permet de former une couche polymère plus homogène, notamment favorise la dispersion du liquide diélectrique dans le matériau polymère thermoplastique à base de polypropylène de ladite couche polymère.

Selon une forme de réalisation préférée de l'invention, le copolymère de propylène P₁ ou les copolymères de propylène P₁ lorsqu'il y en a plusieurs, représente(nt) au moins 50% en poids environ, de préférence de 55 à 90% en poids environ, et de façon particulièrement préférée de 60 à 90% en poids environ, par rapport au poids total du matériau polymère thermoplastique à base de polypropylène.

Le copolymère statistique de propylène P₁ peut représenter au moins 20% en poids environ, et de préférence de 30 à 70% en poids environ, par rapport au poids total du matériau polymère thermoplastique à base de polypropylène.

Le copolymère hétérophasé de propylène P₁, ou les copolymères de propylène hétérophasés P₁ lorsqu'il y en plusieurs, peu(ven)t représenter de 5 à 95% en poids environ, de préférence de 50 à 90% en poids environ, et de façon particulièrement préférée de 60 à 80% en poids environ, par rapport au poids total du matériau polymère thermoplastique à base de polypropylène.

Le matériau polymère thermoplastique à base de polypropylène peut comprendre en outre un homopolymère ou un copolymère d'oléfine P₂, l'oléfine étant notamment choisie parmi l'éthylène et une oléfine α₃ répondant à la formule CH₂=CH-R², dans laquelle R² est un groupe alkyle linéaire ou ramifié ayant de 1 à 12 atomes de carbone.

Ledit homopolymère ou un copolymère d'oléfine P₂ est de préférence différent dudit homopolymère ou copolymère de propylène P₁.

L'oléfine α₃ est de préférence choisie parmi les oléfines suivantes : propylène, 1-butène, isobutylène, 1-pentène, 4-méthyl-1-pentène, 1-hexène, 1-octène, 1-décène, 1-dodécène, et un de leurs mélanges.

L'oléfine α₃ de type propylène, 1-hexène ou 1-octène est particulièrement préférée.

Selon une forme de réalisation avantageuse de l'invention, R² est un groupe alkyle linéaire ou ramifié ayant de 2 à 8 atomes de carbone.

La combinaison de polymères P₁ et P₂ permet d'obtenir un matériau polymère thermoplastique présentant de bonnes propriétés mécaniques, notamment en termes de module élastique, et électriques.

L'homopolymère ou le copolymère d'oléfine P₂ est de préférence un polymère d'éthylène.

Le polymère d'éthylène peut être un polymère d'éthylène ou polyéthylène basse densité, un polyéthylène moyenne densité, ou un polyéthylène haute densité, et de préférence un polyéthylène linéaire basse densité ; notamment selon la norme ISO 1183A (à une température de 23°C).

Dans la présente invention, l'expression « basse densité » signifie ayant une densité allant de 0,91 à 0,925 environ, ladite densité étant mesurée selon la norme ISO 1183A (à une température de 23°C).

Dans la présente invention, l'expression « moyenne densité » signifie ayant une densité allant de 0,926 à 0,940 environ, ladite densité étant mesurée selon la norme ISO 1183A (à une température de 23°C).

Dans la présente invention, l'expression « haute densité » signifie ayant une densité allant de 0,941 à 0,965, ladite densité étant mesurée selon la norme ISO 1183A (à une température de 23°C).

Selon une forme de réalisation préférée de l'invention, l'homopolymère ou copolymère d'oléfine P₂ représente de 5 à 50% en poids environ, et de façon particulièrement préférée de 10 à 40% en poids environ, par rapport au poids total du matériau polymère thermoplastique à base de polypropylène.

Selon une forme de réalisation particulièrement préférée de l'invention, le matériau polymère thermoplastique à base de polypropylène comprend deux copolymères de propylène P₁ tels qu'un copolymère statistique de propylène et un copolymère de propylène hétérophasé ou deux copolymères de propylène hétérophasés différents ; et un homopolymère ou copolymère d'oléfine P₂ tel qu'un polymère d'éthylène. Cette combinaison de copolymères de propylène P₁ et d'un homopolymère ou copolymère d'oléfine P₂ permet d'améliorer encore les propriétés mécaniques de la couche polymère, tout en garantissant une bonne conductivité thermique.

Le matériau polymère thermoplastique de la composition polymère de la couche polymère du câble de l'invention est de préférence hétérophasé (i.e. il comprend plusieurs phases). La présence de plusieurs phases provient généralement du mélange de deux polyoléfines différentes, tel qu'un mélange de polymères de propylène différents ou un mélange d'un polymère de propylène et d'un polymère d'éthylène.

Le matériau polymère thermoplastique tel que défini dans l'invention représente le matériau polymère de la composition polymère de l'invention.

### Le liquide diélectrique

La composition polymère de l'invention peut comprendre en outre un liquide diélectrique, notamment formant un mélange intime avec le matériau polymère thermoplastique.

À titre d'exemples de liquide diélectrique, on peut citer les huiles minérales (e.g. huiles naphténiques, huiles paraffiniques ou huiles aromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques.

Selon un mode de réalisation particulier, le liquide diélectrique représente de 1% à 20% en poids environ, de préférence de 2 à 15% en poids environ, et de façon particulièrement préférée de 3 à 12% en poids environ, par rapport au poids total du matériau polymère thermoplastique.

Le liquide diélectrique peut comprendre une huile minérale et au moins un composé polaire de type benzophénone, acétophénone ou un de leurs dérivés.

Dans ce mode de réalisation, le liquide diélectrique peut comprendre au moins 70% en poids environ d'huile minérale, de préférence au moins 80% en poids environ d'huile minérale, et de façon particulièrement préférée au moins 90% en poids environ d'huile minérale par rapport au poids total du liquide diélectrique.

L'huile minérale est généralement liquide à 20-25°C environ.

L'huile minérale peut être choisie parmi les huiles naphténiques et les huiles paraffiniques.

L'huile minérale est obtenue à partir du raffinage d'un brut pétrolier.

Selon une forme de réalisation particulièrement préférée de l'invention, l'huile minérale comprend une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

Dans un mode de réalisation particulier, le composé polaire de type benzophénone, acétophénone ou un de leurs dérivés représente au moins 2,5% en poids environ, de préférence au moins 3,5% en poids environ, et encore plus préférentiellement au moins 4% en poids environ, par rapport au poids total du liquide diélectrique.

Selon une forme de réalisation préférée de l'invention, le composé polaire de type benzophénone, acétophénone ou un de leurs dérivés est choisi parmi la benzophénone, la dibenzosubérone, la fluorénone et l'anthrone. La benzophénone est particulièrement préférée.

Dans l'invention, le composé oxygéné est compatible avec les liquides diélectriques généralement utilisés dans les câbles à base de polypropylène thermoplastique.

### Additifs

Le matériau polymère thermoplastique peut comprendre en outre un ou plusieurs additifs.

Les additifs sont bien connus de l'homme du métier et peuvent être choisis parmi des agents favorisant la mise en œuvre tels que des lubrifiants, des agents compatibilisants, ou des agents de couplage, des antioxydants, des agents anti-UV, des agents anti-cuivre, des pigments, et un de leurs mélanges.

Le matériau polymère thermoplastique peut typiquement comprendre de 0,01 à 5% en poids environ, et de préférence de 0,1 à 2% en poids environ d'additifs, par rapport au poids total du matériau polymère thermoplastique.

Plus particulièrement, les antioxydants permettent de protéger la composition polymère des contraintes thermiques engendrées lors des étapes de fabrication du câble ou de fonctionnement du câble.

Les antioxydants sont choisis de préférence parmi les phénols encombrés, les antioxydants à base de soufre, les antioxydants à base de phosphore, les antioxydants de type amine, et un de leurs mélanges.

À titre d'exemples de phénols encombrés, on peut citer le Pentaérythritol tétrakis(3-(3,5-di-*tert*-butyl-4-hydroxyphényl)propionate) (Irganox® 1010), l'octadécyl 3-(3,5-di-*tert*-butyl-4-hydroxyphényl)propionate (Irganox® 1076), le 1,3,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10 ou Irganox® 1520), le 2,2'-thiobis(6-*tert*-butyl-4-méthylphénol) (Irganox® 1081), le 2,2'- thiodiéthylène bis[3-(3,5-di-*tert-*butyl-4-hydroxyphényl) propionate] (Irganox® 1035), le tris (3,5-di-*tert*-butyl-4-hydroxybenzyl) isocyanurate (Irganox® 3114), ou le 2,2'-méthylènebis(6-*tert*-butyl-4-méthylphénol).

À titre d'exemples d'antioxydants à base de soufre, on peut citer les thioéthers tels que le didodécyl-3,3'-thiodipropionate (Irganox® PS800), le distéaryl thiodipropionate ou dioctadecyl-3,3'-thiodipropionate (Irganox® PS802), le bis[2-méthyle-4-{3-n-alkyle (C₁₂ ou C₁₄) thiopropionyloxy}-5-*tert-*butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox® 1520 ou Irgastab® KV10).

À titre d'exemples d'antioxydants à base de phosphore, on peut citer les phosphites ou les phosphonates, tels que le tris(2,4-di-*tert*-butyl-phényle)phosphite (Irgafos® 168) ou le bis(2,4-di-*tert-*butylphényl)pentaérythritol diphosphite (Ultranox® 626).

À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl)-N-[4-(1-méthyl-1-phényléthyl)phényl]aniline (Naugard 445), les mercapto benzimidazoles, ou le 2,2,4-triméthyl-1,2 dihydroquinoline polymérisé (TMQ).

À titre d'exemples de mélanges d'antioxydants utilisables selon l'invention, on peut citer l'Irganox B 225 qui comprend un mélange équimolaire d'Irgafos 168 et d'Irganox 1010 tels que décrits ci-dessus.

La composition polymère de la couche polymère de l'invention est une composition polymère thermoplastique. Elle n'est donc pas réticulable.

En particulier, la composition polymère ne comprend pas d'agents de réticulation, d'agents de couplage de type silane, de peroxydes et/ou d'additifs qui permettent une réticulation. En effet de tels agents dégradent le matériau polymère thermoplastique à base de polypropylène.

La composition polymère est de préférence recyclable.

La composition peut en outre comprendre des charges inorganiques inertes telles que de la craie, un kaolin ou du talc ; et/ou des charges minérales sans halogènes destinées à améliorer le comportement au feu de la composition polymère.

Les charges inorganiques inertes et/ou les charges minérales sans halogènes peuvent représenter au plus 30% en poids environ, de préférence au plus 20% en poids environ, de façon particulièrement préférée au plus 10% en poids environ, et de façon plus particulièrement préférée au plus 5% en poids environ, par rapport au poids total de la composition polymère.

Afin de garantir un câble électrique dit « HFFR » pour l'anglicisme « *Halogen Free Flame Retardant* », le câble de l'invention ne comprend préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

La composition polymère peut être préparée en mélangeant le matériau polymère thermoplastique à base de polypropylène avec au moins un composé oxygéné tel que défini dans l'invention, éventuellement un liquide diélectrique et éventuellement un ou plusieurs additifs tels que définis dans l'invention.

### La couche polymère et le câble

La couche polymère du câble de l'invention est une couche non réticulée ou en d'autres termes une couche thermoplastique.

Dans l'invention, l'expression « couche non réticulée » ou « couche thermoplastique » signifie une couche dont le taux de gel selon la norme ASTM D2765-01 (extraction au xylène) est d'au plus 30% environ, de préférence d'au plus 20% environ, de façon particulièrement préférée d'au plus 10% environ, de façon plus particulièrement préférée d'au plus 5% environ, et de façon encore plus particulièrement préférée de 0%.

Dans un mode de réalisation de l'invention, la couche polymère, de préférence non réticulée, présente une tension de claquage après vieillissement en milieu humide d'au moins 42 kV/mm environ, de préférence d'au moins 45 kV/mm environ, de façon particulièrement préférée d'au moins 50 kV/mm environ, et de façon plus particulièrement préférée d'au moins 70 kV/mm environ.

La tension de claquage après vieillissement en milieu humide est mesurée par un test sur câbles modèles selon la méthode décrite dans le document « Model Cable Test for Evaluating the Aging Behaviour under Water Influence of Compounds for Medium Voltage Cables », H.G. Land et Hans Schädlich, pages 177 à 182, publié lors de la « Conference Proceedings of Jicable 91 », du 24-28 Juin 1991, à Versailles, France.

Dans un mode de réalisation particulièrement préféré de l'invention, la couche polymère, de préférence non réticulée, présente une réduction de la tension de claquage après vieillissement en milieu humide d'au plus 30% environ, de préférence d'au plus 20% environ, et de façon particulièrement préférée d'au plus 18% environ.

Dans un mode de réalisation particulier, la couche polymère, de préférence non réticulée, présente une résistance à la traction (RT) d'au moins 12,5 MPa, notamment avant ou après vieillissement (selon la norme CEI 20-86).

Dans un mode de réalisation particulier, la couche polymère, de préférence non réticulée, présente une élongation à la rupture (ER) d'au moins 200%, notamment avant ou après vieillissement (selon la norme CEI 20-86).

Les mesures de la résistance à la traction (RT) et de l'élongation à la rupture (ER) (avant ou après vieillissement) peuvent être effectuées selon la Norme NF EN 60811-1-1, notamment à l'aide d'un appareil commercialisé sous la référence 3345 par la société Instron.

La couche polymère du câble de l'invention est de préférence une couche recyclable.

La couche polymère de l'invention peut être une couche extrudée, notamment par des procédés bien connus de l'homme du métier.

La couche polymère du câble de l'invention peut être une couche électriquement isolante ou une couche semi-conductrice.

Lorsque la couche polymère est une couche semi-conductrice, la composition polymère telle que définie dans l'invention comprend au moins une charge conductrice, notamment en quantité suffisante pour rendre la couche semi-conductrice.

La composition polymère peut par exemple comprendre au moins 6% en poids environ de charge conductrice, de préférence au moins 10% en poids environ de charge conductrice, préférentiellement au moins 15% en poids environ de charge conductrice, et encore plus préférentiellement au moins 25% en poids environ de charge conductrice, par rapport au poids total de la composition polymère.

La composition polymère peut comprendre au plus 45% en poids environ de charge conductrice, et de préférence au plus 40% en poids environ de charge conductrice, par rapport au poids total de la composition polymère.

La charge conductrice est de préférence une charge électriquement conductrice.

La charge conductrice peut être choisie avantageusement parmi les noirs de carbone, les graphites, et un de leurs mélanges.

Selon une forme de réalisation particulièrement préférée de l'invention, la couche polymère est une couche polymère électriquement isolante.

La composition polymère peut alors comprendre moins de 6% en poids environ de charge conductrice, de préférence moins de 1% en poids environ de charge conductrice, et encore plus préférentiellement 0% en poids environ de charge conductrice, par rapport au poids total de la composition polymère.

La couche polymère, en particulier la couche polymère électriquement isolante, présente une épaisseur variable en fonction du type de câble envisagé. En particulier, lorsque le câble conforme à l'invention est un câble à moyenne tension, l'épaisseur de la couche polymère électriquement isolante est typiquement de 3 à 5,5 mm environ, et plus particulièrement de 4,5 mm environ. Lorsque le câble conforme à l'invention est un câble haute tension, l'épaisseur de la couche polymère électriquement isolante varie typiquement de 15 à 18 mm (pour des tensions de l'ordre 150 kV environ) et pour aller jusqu'à des épaisseurs allant de 20 à 25 mm environ pour des tensions supérieures à 150 kV (câbles à très haute tension). Les épaisseurs précitées dépendent de la taille de l'élément électriquement conducteur allongé.

Dans la présente invention, on entend par « couche électriquement isolante » une couche dont la conductivité électrique peut être d'au plus 1.10⁻⁸ S/m (siemens par mètre), de préférence d'au plus 1.10⁻⁹ S/m, et de façon particulièrement préférée d'au plus 1.10⁻¹⁰ S/m (Siemens par mètre), mesurée à 25°C en courant continu.

La couche polymère de l'invention peut comprendre au moins un matériau polymère thermoplastique à base de polypropylène, au moins un composé oxygéné ayant une température de fusion supérieure ou égale à 110°C environ, éventuellement un ou plusieurs additifs, et éventuellement au moins une charge conductrice, les ingrédients précités étant tels que définis dans l'invention.

Les proportions des différents ingrédients dans la couche polymère peuvent être identiques à celles telles que décrites dans l'invention pour ces mêmes ingrédients dans la composition polymère.

La couche polymère du câble de l'invention entoure l'élément électriquement conducteur allongé.

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, ou en une de leurs combinaisons.

Le câble électrique peut comprendre :
- au moins une couche semi-conductrice entourant l'élément électriquement conducteur allongé, et
- au moins une couche électriquement isolante entourant l'élément électriquement conducteur allongé,
au moins l'une des couches semi-conductrice et électriquement isolante étant une couche polymère telle que définie dans l'invention.

La couche électriquement isolante a plus particulièrement une conductivité électrique inférieure à celle de la couche semi-conductrice. Plus particulièrement, la conductivité électrique de la couche semi-conductrice peut être au moins 10 fois supérieure à la conductivité électrique de la couche électriquement isolante, de préférence au moins 100 fois supérieure à la conductivité électrique de la couche électriquement isolante, et de façon particulièrement préférée au moins 1000 fois supérieure à la conductivité électrique de la couche électriquement isolante.

La couche semi-conductrice peut entourer la couche électriquement isolante. La couche semi-conductrice peut alors être une couche semi-conductrice externe.

La couche électriquement isolante peut entourer la couche semi-conductrice. La couche semi-conductrice peut alors être une couche semi-conductrice interne.

La couche semi-conductrice est de préférence une couche semi-conductrice interne.

Le câble électrique de l'invention peut en outre comprendre une autre couche semi-conductrice.

Ainsi, dans ce mode de réalisation, le câble de l'invention peut comprendre :
- au moins un élément électriquement conducteur allongé, notamment positionné au centre du câble,
- une première couche semi-conductrice entourant l'élément électriquement conducteur allongé,
- une couche électriquement isolante entourant la première couche semi-conductrice, et
- une deuxième couche semi-conductrice entourant la couche électriquement isolante,
au moins l'une des couches semi-conductrices et électriquement isolante étant une couche polymère telle que définie dans l'invention, et de préférence au moins la couche électriquement isolante étant une couche polymère telle que définie dans l'invention.

Dans la présente invention, on entend par « couche semi-conductrice » une couche dont la conductivité électrique peut être strictement supérieure à 1.10⁻⁸ S/m (Siemens par mètre), de préférence d'au moins 1.10⁻³ S/m, et de préférence peut être inférieure à 1.10³ S/m, mesurée à 25°C en courant continu.

Dans un mode de réalisation particulier, la première couche semi-conductrice, la couche électriquement isolante et la deuxième couche semi-conductrice constituent une isolation tricouche. En d'autres termes, la couche électriquement isolante est en contact physique direct avec la première couche semi-conductrice, et la deuxième couche semi-conductrice est en contact physique direct avec la couche électriquement isolante.

Lorsque la couche polymère telle que définie dans l'invention est une couche électriquement isolante, la première et/ou la deuxième couche(s) semi-conductrice(s) est(sont) de préférence obtenue(s) à partir d'une composition polymère comprenant au moins un matériau polymère thermoplastique à base de polypropylène tel que défini dans l'invention, et éventuellement au moins une charge conductrice telle que définie dans l'invention.

La première et/ou la deuxième couche(s) semi-conductrice(s) est(sont) de préférence des couches thermoplastiques ou non réticulées.

Le câble peut comprendre en outre une gaine extérieure de protection entourant la deuxième couche semi-conductrice, et peut être en contact physique direct avec celle-ci.

La gaine extérieure de protection peut être une gaine électriquement isolante.

Le câble électrique peut comprendre en outre un écran électrique (e.g. métallique) entourant la deuxième couche semi-conductrice. Dans ce cas, la gaine électriquement isolante entoure ledit écran électrique et l'écran électrique est entre la gaine électriquement isolante et la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

Le câble de l'invention concerne plus particulièrement le domaine des câbles électriques fonctionnant en courant continu (DC) ou en courant alternatif (AC).

Le câble électrique conforme au premier objet de l'invention peut être obtenu selon un procédé comprenant au moins une étape 1) d'extrusion de la composition polymère telle que définie dans le premier objet de l'invention autour d'un élément électriquement conducteur allongé, pour obtenir une couche polymère (extrudée) entourant ledit élément électriquement conducteur allongé.

L'étape 1) peut être réalisée par des techniques bien connues de l'homme du métier, par exemple à l'aide d'une extrudeuse.

Lors de l'étape 1), la composition en sortie d'extrudeuse est dite « non réticulée », la température ainsi que le temps de mise en œuvre au sein de l'extrudeuse étant optimisés en conséquence.

En sortie d'extrudeuse, on obtient donc une couche extrudée autour dudit élément électriquement conducteur, pouvant être ou non, directement en contact physique avec ledit élément électriquement conducteur allongé.

Le procédé ne comprend pas de préférence d'étape de réticulation de la couche obtenue à l'étape 1).

La couche électriquement isolante et/ou la ou les couche(s) semi-conductrice(s) du câble électrique de l'invention peuvent être obtenues par extrusion successive ou par co-extrusion.

Préalablement à l'extrusion de chacune de ces couches autour d'au moins un élément électriquement conducteur allongé, l'ensemble des constituants nécessaires à la formation de chacune de ces couches peut être dosé et mélangé dans un mélangeur en continu de type co-malaxeur BUSS, extrudeuse bi-vis ou un autre type de mélangeur approprié pour des mélanges polymères, notamment chargés. Le mélange peut être ensuite extrudé sous forme de joncs, puis refroidi et séché pour être mis sous forme de granulés, ou alors le mélange peut être mis directement sous forme de granulés, par des techniques bien connues de l'homme du métier. Ces granulés peuvent être ensuite introduits au sein d'une extrudeuse mono-vis afin d'extruder et de déposer la composition autour de l'élément électriquement conducteur allongé pour former la couche en question.

Les différentes compositions peuvent être extrudées les unes à la suite des autres pour entourer de façon successive l'élément électriquement conducteur allongé, et ainsi former les différentes couches du câble électrique de l'invention.

Elles peuvent alternativement être extrudées concomitamment par co-extrusion à l'aide d'une unique tête d'extrudeuse, la co-extrusion étant un procédé bien connu de l'homme du métier.

Que ce soit dans l'étape de formation des granulés ou dans l'étape d'extrusion sur câble, les conditions opératoires sont bien connues de l'homme du métier. Notamment, la température au sein du dispositif de mélange ou d'extrusion peut être supérieure à la température de fusion du polymère majoritaire ou du polymère ayant la température de fusion la plus élevée, parmi les polymères utilisés dans la composition à mettre en œuvre.

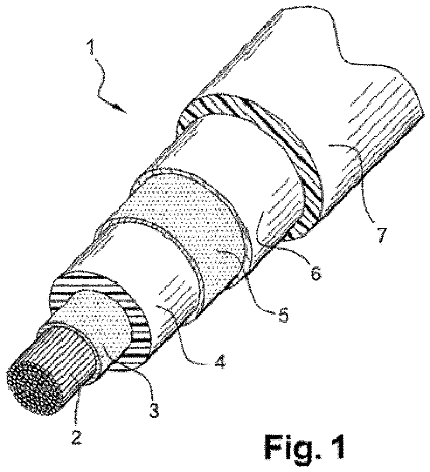

La figure 1 représente une vue schématique d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble électrique 1 à moyenne ou haute tension conforme au premier objet de l'invention, illustré dans la figure 1, comprend un élément électriquement conducteur 2 allongé central, notamment en cuivre ou en aluminium. Le câble électrique 1 comprend en outre plusieurs couches disposées successivement et coaxialement autour de cet élément électriquement conducteur allongé central 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche électriquement isolante 4 est une couche extrudée non réticulée, obtenue à partir de la composition polymère telle que définie dans l'invention.

Les couches semi-conductrices 3 et 5 sont des couches extrudées thermoplastiques (i.e. non réticulées).

La présence de l'écran métallique 6 et de la gaine extérieure de protection 7 est préférentielle, mais non essentielle, cette structure de câble étant en tant que telle bien connue de l'homme du métier.

### EXEMPLES

### 1. Compositions polymères

Des compositions **I1**, **I2**, et **I3** conformes à l'invention, i.e. comprenant au moins un matériau polymère thermoplastique à base de polypropylène et au moins un composé oxygéné ayant une température de fusion supérieure ou égale à 110°C environ en tant qu'agent réduisant les arborescences d'eau, ont été comparées à une composition C1 comparative, la composition C1 correspondant à une composition comprenant un matériau polymère thermoplastique à base de polypropylène identique à celui utilisé pour les compositions de l'invention **I1**, **I2**, et **I3** mais ne comprenant pas de composé oxygéné telle que défini dans l'invention.

Le tableau 1 ci-dessous rassemble les compositions polymères précitées dont les quantités des composés sont exprimées en pourcentages en poids, par rapport au poids total de la composition polymère.

**TABLEAU 1**

| **Compositions polymères** | | **C1 (*)** | **I1** | **I2** | **I3** |
|---|---|---|---|---|---|
| copolymère de propylène hétérophasé A | | 53,8 | 52,3 | 48,8 | 51,3 |
| copolymère de propylène hétérophasé B | | 15 | 15 | 15 | 15 |
| polyéthylène linéaire basse densité | | 25 | 25 | 25 | 25 |
| **composé oxygéné 1** | | 0 | 1,5 | 0 | 0 |
| **composé oxygéné 2** | | 0 | 0 | 5 | 2,5 |
| liquide diélectrique | huile minérale | 5,4 | 5,4 | 5,4 | 5,4 |
| | benzophénone | 0,3 | 0,3 | 0,3 | 0,3 |
| antioxydant | | 0,5 | 0,5 | 0,5 | 0,5 |

| | | | | | |
|---|---|---|---|---|---|
| (*) Composition comparative ne faisant pas partie de l'invention | | | | | |

L'origine des composés du tableau 1 est la suivante :
- copolymère de propylène hétérophasé A commercialisé par la société LyondeIIBaseII Industries sous la référence Moplen EP2967 ;
- copolymère de propylène hétérophasé B commercialisé par la société LyondeIIBaseII Industries sous la référence Adflex® Q 200F ;
- polyéthylène linéaire basse densité commercialisé par la société ExxonMobil Chemicals sous la référence LLDPE 1002 YB ;
- composé oxygéné 1 commercialisé par la société Perstorp sous la référence Voxtar D50, ayant une température de fusion de 222°C ;
- composé oxygéné 2 commercialisé par la société Honeywell sous la référence A-C 907 P, ayant un indice de saponification de 87, et une température de fusion de 145°C pour la composition **I2** ; et commercialisé par la société Clariant sous la référence Licocene 6452, ayant un numéro d'acide de 41 et une température de fusion de 134°C pour la composition **I3** ;
- liquide diélectrique comprenant 5,4% en poids environ d'une huile minérale naphténique commercialisée par la société Nynas sous la référence Nyflex 223 pour les compositions **C1**, **I1**, **I2** ; et d'une huile minérale naphténique commercialisée par la société Nynas sous la référence Nyflex BNS28 pour la composition **I3** ; et 0,3% en poids environ de benzophénone commercialisée par la société Sigma-Aldrich sous la référence B9300 ; et
- antioxydant commercialisé par la société Ciba sous la référence Irganox B 225 qui comprend un mélange équimolaire d'Irgafos 168 et d'Irganox 1010.

### 2. Préparation des couches non réticulées et des câbles

Les compositions rassemblées dans le tableau 1 sont mises en œuvre comme suit.

Les constituants suivants : huile minérale, antioxydant et benzophénone des compositions **C1**, **I1**, **I2** et **I3** référencées dans le tableau 1, pour chaque couche à considérer, sont dosés et mélangés sous agitation à 75°C environ, afin de former un mélange liquide comprenant le liquide diélectrique.

Le mélange liquide est ensuite mélangé aux constituants suivants : copolymère de propylène hétérophasé A, copolymère de propylène hétérophasé B, polyéthylène basse densité, et éventuellement composé oxygéné 1 ou 2 des compositions **C1**, **I1**, **I2** et **I3** référencées dans le tableau 1, pour chaque couche polymère à considérer, dans un récipient. Puis, le mélange résultant est homogénéisé à l'aide d'une extrudeuse à double vis (« Berstorff twin screw extruder ») à une température de 145 à 180°C environ, puis fondu à 200°C environ (vitesse des vis : 80 tours/min).

Le mélange homogénéisé et fondu est ensuite mis sous la forme de granulés.

Des câbles sont fabriqués avec une extrudeuse de laboratoire et soumis à des caractérisations électriques. Chacun des câbles comprend :
- un élément électriquement conducteur de section transversale de 1,4 à 1,5 mm,
- une première couche semi-conductrice entourant ledit élément électriquement conducteur d'une épaisseur de 0,7 mm,
- une couche polymère électriquement isolante obtenue à partir de la composition polymère de l'invention **I1** ou **I2** ou **I3**, ou d'une composition polymère comparative **C1**, ladite couche polymère électriquement isolante entourant ladite première couche semi-conductrice, et
- une deuxième couche semi-conductrice entourant ladite couche électriquement isolante.

Les câbles ont un diamètre total extérieur de 6,2 mm environ et une longueur totale de 200 m environ. Ils sont dénudés de la deuxième couche semi-conductrice selon une épaisseur de 150 µm.

La couche électriquement isolante a une épaisseur de 1,5 mm.

Les couches semi-conductrices sont des couches thermoplastiques obtenues à partir d'une composition comprenant au moins un matériau polymère thermoplastique à base de polypropylène, et au moins une charge conductrice en quantité suffisante pour rendre les couches semi-conductrices.

On obtient ainsi respectivement les câbles électriques **Ci1**, **Ci2**, **Ci3** et **Cc1** comprenant chacun quatre couches extrudées. L'élément électriquement conducteur de section transversale de 1,4 à 1,5 mm est ensuite enlevé et remplacé par un élément électriquement conducteur de section transversale de 0,75 à 0,8 mm dans le but de pouvoir mettre de l'eau entre ledit élément électriquement conducteur et la couche semi-conductrice interne.

Des tests de claquage avant et après vieillissement en milieu humide ont ensuite été effectués.

La méthode utilisée est celle décrite dans le document « Model Cable Test for Evaluating the Aging Behaviour under Water Influence of Compounds for Medium Voltage Cables », H.G. Land et Hans Schâdlich, pages 177 à 182, publié lors de la « Conference Proceedings of Jicable 91 », du 24-28 Juin 1991, à Versailles, France.

Cette méthode consiste tout d'abord à effectuer des tests de claquage avec une tension alternative avec une fréquence de 50 Hz sur des échantillons « non vieillis » (ayant subi un conditionnement à 90°C pendant 16 heures en milieu non humide) de câbles électriques **Ci1**, **Ci2**, **Ci3** et **Cc1** pour déterminer la valeur initiale de la tension de claquage, et ensuite à effectuer ces tests de claquage sur des échantillons « vieillis » de câbles électriques **Ci1**, **Ci2**, **Ci3** et **Cc1**, mis sous tension alternative, dans un bac d'eau chauffée à 70°C pendant 1000 heures (selon les conditions référencées « *Ageing 2* » dans ledit document) et en présence d'eau chauffée à 85°C entre le conducteur et la « couche semi-conductrice interne » pour déterminer leur tension de claquage après 1000 h.

Le champ électrique de claquage (en kV/mm) du câble électrique correspond à la tension nécessaire pour former un arc électrique au sein du câble. Il est typiquement ramené au champ électrique à travers l'épaisseur de la couche électriquement isolante, entre la première couche semi-conductrice (ou couche semi-conductrice interne) et la deuxième couche semi-conductrice (ou couche semi-conductrice externe).

Les résultats des tensions de claquage sont rassemblés dans le tableau 2 ci-après.1.

**TABLEAU 2**

| **Câble** | **Valeur initiale (kV/ mm)** | **Valeur après 1000h (kV/ mm)** |
|---|---|---|
| **Cc1 (*)** | 130 | 41 |
| **Ci1** | 58 | 49 |
| **Ci2** | 95 | 81 |
| **Ci3** | 133 | 77 |

| | | |
|---|---|---|
| (*) Composition comparative ne faisant pas partie de l'invention | | |

L'ensemble de ces résultats montre que l'incorporation d'un composé oxygéné tel que défini dans l'invention dans une couche polymère, notamment électriquement isolante, à base de polypropylène, donne lieu à une très bonne tenue au vieillissement et à une résistance aux arborescences d'eau améliorée.

## Revendications

1. Câble électrique (1) comprenant au moins un élément électriquement conducteur allongé (2), et au moins une couche polymère (3, 4, 5) entourant ledit élément électriquement conducteur allongé (2), **caractérisé en ce que** la couche polymère (3, 4, 5) est obtenue à partir d'une composition polymère comprenant au moins un matériau polymère thermoplastique à base de polypropylène comprenant un homopolymère ou un copolymère de propylène P₁, et au moins un agent réduisant les arborescences d'eau, ledit agent réduisant les arborescences d'eau étant un composé oxygéné ayant une température de fusion supérieure ou égale à 110°C.

2. Câble électrique (1) selon la revendication 1, **caractérisé en ce que** le composé oxygéné a une température de fusion supérieure ou égale à 120°C.

3. Câble électrique (1) selon la revendication 1 ou 2, **caractérisé en ce que** le composé oxygéné a une masse molaire allant de 200 à 5000000 g/mol.

4. Câble électrique (1) selon l'une quelconque des revendications précédentes, **caractérisé en ce que** le composé oxygéné comprend une ou plusieurs fonctions choisies parmi les fonctions alcool, ester, acide, anhydride d'acide, et un de leurs mélanges.

5. Câble électrique (1) selon l'une quelconque des revendications précédentes, **caractérisé en ce que** le composé oxygéné est choisi parmi les polyols aliphatiques, les polyols comprenant au moins deux fonctions alcools primaires, et les homo- et les copolymères de propylène fonctionnalisés par des fonctions anhydride d'acide.

6. Câble électrique (1) selon l'une quelconque des revendications précédentes, **caractérisé en ce que** le composé oxygéné est le dipentaérythritol.

7. Câble électrique (1) selon l'une quelconque des revendications 1 à 5, **caractérisé en ce que** le composé oxygéné est choisi parmi les homopolymères de propylène fonctionnalisés par des fonctions anhydride maléique.

8. Câble électrique (1) selon l'une quelconque des revendications précédentes, **caractérisé en ce que** la composition polymère comprend de 0,1 à 15% en poids de composé oxygéné, par rapport au poids total de la composition polymère.

9. Câble électrique (1) selon l'une quelconque des revendications précédentes, **caractérisé en ce que** le matériau polymère thermoplastique à base de polypropylène comprend au moins 50% en poids de polymère(s) de propylène, par rapport au poids total du matériau polymère thermoplastique à base de polypropylène.

10. Câble électrique (1) selon l'une quelconque des revendications précédentes, **caractérisé en ce que** le matériau polymère thermoplastique à base de polypropylène comprend un copolymère statistique de propylène ou un copolymère de propylène hétérophasé, en tant que copolymère de propylène P₁.

11. Câble électrique (1) selon l'une quelconque des revendications précédentes, **caractérisé en ce que** le matériau polymère thermoplastique à base de polypropylène comprend un copolymère statistique de propylène et un copolymère de propylène hétérophasé, ou deux copolymères de propylène hétérophasés différents.

12. Câble électrique (1) selon l'une quelconque des revendications précédentes, **caractérisé en ce que** le matériau polymère thermoplastique à base de polypropylène comprend en outre un homopolymère ou un copolymère d'oléfine P₂.

13. Câble électrique (1) selon l'une quelconque des revendications précédentes, **caractérisé en ce que** la composition polymère comprend en outre un liquide diélectrique.

14. Câble électrique (1) selon l'une quelconque des revendications précédentes, **caractérisé en ce que** la couche polymère (3, 4, 5) est une couche non réticulée.

15. Câble électrique (1) selon l'une quelconque des revendications précédentes, **caractérisé en ce que** la couche polymère (3, 4, 5) présente une réduction de la tension de claquage après vieillissement en milieu humide d'au plus 30%.

16. Câble électrique (1) selon l'une quelconque des revendications précédentes, **caractérisé en ce qu'**il comprend :
- au moins une couche semi-conductrice (3, 5) entourant l'élément électriquement conducteur allongé (2), et
- au moins une couche électriquement isolante (4) entourant l'élément électriquement conducteur allongé (2),
au moins l'une des couches semi-conductrice (3, 5) et électriquement isolante (4) étant une couche polymère telle que définie à l'une quelconque des revendications précédentes.
